# EUROPEAN PATENT APPLICATION

(11) **EP 0 552 834 A1**
(43) Date of publication of application: **28.07.1993**
(21) Application number: 93200110.0
(22) Date of filing: 18.01.1993
(51) Int. Cl.: H04M 1/11, F16M 11/24

(54) **Height adjustment of a telecommunication terminal**

(30) Priority: 24.01.1992 NL 9200141
(71) Applicant: Koninklijke PTT Nederland N.V., NL-2509 CH The Hague (NL)
(72) Inventor: Leether, Theodorus Hendricus Anthonius, NL-6521 EA Nijmegen (NL)

(57) **Abstract**

A device for adjusting the height of a telecommunication terminal, such as a payphone 1, comprises a roller shutter 4 having a slat system 3 to which the terminal is propellably coupled. Said roller shutter is preferably of a motor-driveable type and remotely controllable so that a physically handicapped person can adjust the terminal to the desired usage height himself.

## Description

### A. Background of the invention

The invention relates to a device for adjusting the height of a telecommunication terminal.

In buildings such as hospitals, rest-homes, convalescent homes and the like, telephone booths are normally installed which may preferably be used both by visitors and by patients. Since patients are often wheelchair users, that is to say they generally require a different operating height from visitors, it is desirable that the height of an instrument present in the telephone booth is adjustable.

A device for adjusting the height of a telecommunication terminal is disclosed in German Offenlegungsschrift 2,648,534.

In this known device, the height is adjusted by means of a motor-driven rack and pinion, the terminal moving along rails mounted on the wall. This requires a special structure which is assembled for this purpose from loose components and which is either permanently mounted on the wall or in a specially manufactured framework in which or to which the terminal is propellably coupled to the height adjustment device. In most cases this entails relatively high costs and long delivery times.

### B. Summary of the invention

The object of the invention is to provide a device having facility for adjusting the height of a telecommunication terminal, which device does not have the disadvantages mentioned. For this purpose, the device comprises a roller screen, known per se, to which the terminal can be propellably coupled. Within the scope of the description of the invention, roller screen is understood to mean: an essentially vertically movable roller shutter, roller grating or roller blind, or a similar structure having the utilisation purpose, which is known per se, of screening or closing off, respectively, a wall section or a wall opening. Use of a commercially obtainable roller screen, such as can be supplied complete with guide device, makes it possible to meet the requirement for a height-adjustable telecommunication terminal in a simple and rapid manner and at relatively low cost. The screening parts of such roller screens are in general of such robust and sturdy construction that the propellable coupling required is readily possible. If the roller screen concerned is of the type which is provided with a motor drive and is remotely controllable, the user of the facility can set a suitable height himself by making use of the remote control.

### C. Reference

German Offenlegungsschrift 2,648,534: Behindertengerechte Hebevorrichtung für Automaten und Telefone [Lifting device for automatic appliances and telephones suitable for handicapped people].

### D. Short description of the drawing

The invention will be explained in greater detail on the basis of a description of an exemplary embodiment, reference being made to a drawing, wherein:
- Fig. 1 shows a device according to the invention in which a terminal is situated in a first position;
- Fig. 2 shows a device, as shown in Fig. 1, in which the terminal is in a second position.

### E. Description of an exemplary embodiment

In an exemplary embodiment of a device according to the invention, the device comprises a roller shutter having a slat system to which a telecommunication terminal is propellably coupled. The coupling may be effected, for example, by attaching a panel on which the terminal is mounted to one or more of the slats so that, when the slats of the roller shutter move up or down, the panel, together with the terminal, also moves up or down.

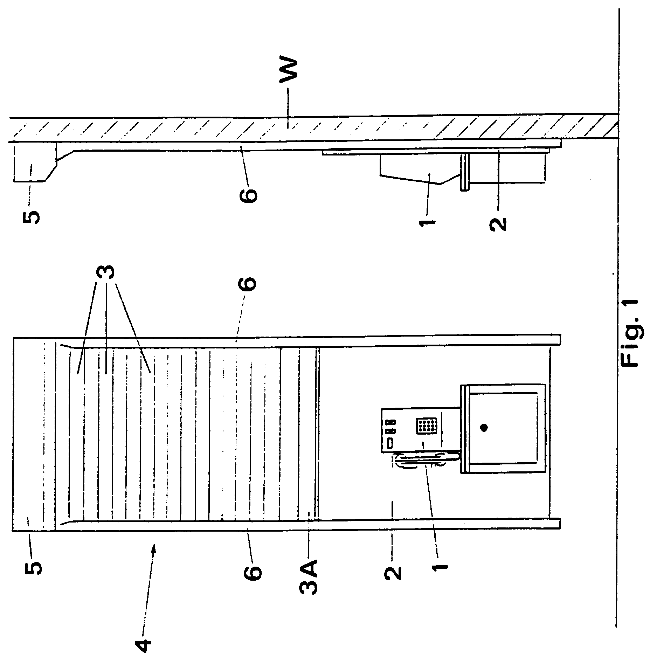

In Fig. 1, 1 is a payphone mounted on a panel 2. The panel is propellably coupled to one or more of the slats 3 of a roller shutter 4 mounted on a wall W, one of which slats is indicated in the figure by 3A. The propellable coupling may be effected, for example, by attaching the panel 2 to slat 3A with the aid of bolts and nuts, or by suspending the panel 2 on slat 3A by means of brackets which are attached to the panel and are hooked over slat 3A. The slat 3A can be moved up and down, together with the other slats, by means of a drive device (not shown) in an upper housing 5 of the roller shutter 4. In this process, the slats move in a vertical path determined by a guide device comprising rails 6. When the drive device of the roller shutter is activated in the position shown, the slat 3A moves, together with the other slats, upwards and propels the panel 2, along with the telephone set 1. The necessary connecting cables are situated behind the slats of the roller shutter and protected from damage.

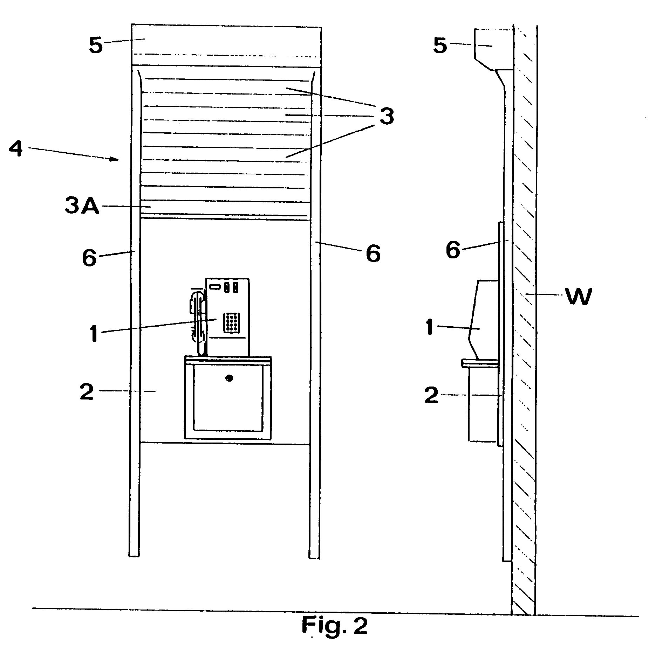

Fig. 2 shows the device with the panel 2 in the highest position. The meaning of the numerals in Fig. 2 is the same as in Fig. 1.

In a further preferred embodiment of a device according to the invention, a sound-insulating hood which partly surrounds the telephone set in an otherwise known manner, in particular in the case of wall instruments, is mounted on the panel 2.

Although the exemplary embodiment shown in Fig. 1 and Fig. 2 is based on a roller shutter, use may also be made in a device according to the invention of a roller grating with mutually hinging crossbars, such as is used to protect shop fronts.

## Claims

1. Device for adjusting the height of a telecommunication terminal, characterised in that the device comprises a roller screen to which the terminal can be propellably coupled.

2. Device according to Claim 1, characterised in that the roller screen is a roller shutter having a slat system to which the terminal can be propellably coupled.

3. Device according to Claim 1, characterised in that the roller screen is a roller grating having a lattice work which can be rolled up and which can be propellably coupled to the terminal.

4. Device provided with a height-adjustable tele-communication terminal, characterised in that the device comprises a roller screen to which the terminal is propellably coupled.

5. Device according to Claim 4, characterised in that the roller screen is a roller shutter having a slat system to which the terminal is propellably coupled.

6. Device according to Claim 4, characterised in that the roller screen is a roller grating having a lattice work which can be rolled up and to which the terminal is propellably coupled.

7. Device according to Claim 1, 2 or 3, characterised in that a hood which partly surrounds the terminal can also be propellably coupled to the roller screen.

8. Device according to Claim 4, 5 or 6, characterised in that a hood which partly surrounds the terminal is also propellably coupled to the roller screen.

9. Device according to one of the preceding claims, characterised in that the roller screen is of a motor-controlled type.

10. Device according to Claim 9, characterised in that the motor control is provided with remote-control means.
